(19) Europäisches Patentamt
European Patent Office
Office européen des brevets

(11) EP 0 699 632 A1

(12) **EUROPÄISCHE PATENTANMELDUNG**

(43) Veröffentlichungstag:
**06.03.1996 Patentblatt 1996/10**

(51) Int. Cl.$^6$: **C02F 5/12**, C23F 11/173

(21) Anmeldenummer: **95113233.1**

(22) Anmeldetag: **23.08.1995**

(84) Benannte Vertragsstaaten:
**AT BE CH DE DK ES FR GB GR IE IT LI NL PT SE**

(30) Priorität: **03.09.1994 DE 4431461**

(71) Anmelder: **Degussa Aktiengesellschaft
D-60311 Frankfurt (DE)**

(72) Erfinder: **Ragnetti, Maurizio, Dr.
D-55246 Mainz-Kostheim (DE)**

(54) **Verwendung von Copolymeren zur Verhinderung von Schwermetallsulfidbelägen in hochenthalpische Fluide führenden Systemen**

(57) 2.1 Bei bekannten Verfahren wurden u. a. Polyampholyte eingesetzt, die jedoch gegen bestimmte Schwermetallsulfidbeläge keine befriedigende Effizienz zeigen. Das neue Verfahren soll dieses Problem beseitigen.

2.2 Es kennzeichnet sich dadurch, daß ein Copolymer eingesetzt wird, das durch Umsetzung von

A) wenigstens einem vinylisch ungesättigten Monomeren, welches wenigstens eine Carboxylgruppe aufweist

mit

B) wenigstens einem vinylisch ungesättigten Monomeren, welches wenigstens eine tertiäre Aminogruppe aufweist,

erhältlich ist.

2.3 In Anlagen zur Gewinnung von geothermischer Energie, insbesondere zur Verhinderung von Inkrustationen aus Schwermetallsulfiden, wie Wismut-, Antimon- oder Bleisulfid.

EP 0 699 632 A1

## Beschreibung

Die Erfindung betrifft die Verwendung an sich bekannter Copolymerer zur Verhinderung von Korrosion und Belägen in hochenthalpische Fluide führenden Systemen, wobei das hochenthalpische Fluid mit einer wirksamen Menge wenigstens eines Copolymeren in Kontakt gebracht wird.

Korrosion und Beläge, insbesondere Schwermetallablagerungen, bilden oft ein Problem bei der Gewinnung und Förderung großer Mengen hochenthalpischer Fluide, beispielsweise von Wasser. Besonders gravierend ist dieses Problem in der geothermischen Energiegewinnung aus hoch- bzw. niederenthalpischen Fluiden (Stromgewinnung sowie Fernwärme), in der Erdölindustrie, usw. (siehe z. B. Criaud et al. in Geothermics, 18, 73 (1989). Gelöste Schwermetalle sind in geothermalen Quellen praktisch immer vorhanden und können unter ungünstigen Bedingungen von Temperatur, Druck und Zusammensetzung der Fluide als Oxide bzw. als Sulfide ausfallen. Dies ergibt an den Kontaktflächen von Förderbrunnen, Transportleitungen, Wärmetauschern, Ventilen usw. oft kompakte und schwerlösliche Inkrustationen, die sogar zur Abstellung größerer Anlagen und zu kostspieligen Wartungen zwingen.

Die vorerwähnten Ablagerungen bestehen häufig von Gemischen aus carbonatischen, sulfatischen und silikatischen Fällungen zusammen mit Metalloxiden und -sulfiden (siehe Thomas et al. in Geothermics, 18, 5 (1989)). Zur Bekämpfung der Ablagerungen aus Carbonaten und Sulfaten von Erdalkalimetallen (bes. Ca und Ba) sind zahlreiche Gegenmittel entwickelt worden (siehe z. B. Pieri et al. in Geothermics 18, 249 (1989)), die in Abhängigkeit der gegebenen technischen Bedingungen mit unterschiedlichem Erfolg eingesetzt werden konnten. Dabei kommen besonders polymere Substanzen wie Polycarbonsäuren (z. B. JP 60212589) oder sulfonierte Copolymere (z. B. EP 122 013) zum Einsatz.

Weitverbreitet und auf Grund ihrer chemischen Stabilität wesentlich belastender sind Kieselsäureinkrustationen, die üblicherweise nicht durch eine einfache "chemische Reinigung" beseitigt werden können. Auch hierzu sind verschiedene Lösungen vorgeschlagen worden, die von der Verwendung von Fällungsinhibitoren bis hin zu neuartigen Behandlungsverfahren der hochenthalpischen Fluide reichen (siehe z. B. Rothbaum in Chem. N. Z. 44 179 (1980), US 4 776 961, US 4 328 106 und JP 63091195). Auch die JP-OS 63-88100 befaßt sich mit der Verhinderung von Kesselstein, wobei nicht nur Calcit-förmiger Kesselstein sondern vornehmlich amorpher Kesselstein, wie z. B. Silica, effektiv verhindert wird. Dies geschieht durch Verwendung von makromolekularen Polymeren mit tertiären Aminogruppen, wobei als Monomere mit tertiären Aminogruppen u. a. N,N-Dimethylaminoethylacrylat, N,N-Diethylaminoethylacrylat, 2-Vinylpyridin, N,N-Dimethylaminopropylacrylamid und ähnliche Verbindungen aufgezählt werden.

Die US-PS 3,620,667 offenbart Mittel gegen Korrosion, insbesondere gegen die Entstehung von Eisenoxyd. Die eingesetzten Polymere leiten sich von Monomeren ab, die Nitril oder Amidgruppen beinhalten.

Die US-PS 4,913,880 beschäftigt sich mit Polymermischungen, die zur Wasserbehandlung eingesetzt werden. Wieder geht es um Korrosionsschutz. Die zur Verhinderung von $CaCO_3$ oder eisenoxidischen Belägen eingesetzten Polymeren leiten sich von $\alpha,\beta$-ungesättigten Monomeren ab, die vorzugsweise Carbonsäure- oder Carbonsäureamidfunktionen aufweisen, und von Aminogruppen enthaltenden Alkylethern. Hydroxamidgruppenhaltige Polymere sind aus EP-A 0 526 786 bekannt. Sie dienen als Korrosionsinhibitoren für Eisen und Stahl in Kontakt mit Industriewässern.

In der DE 25 36 969 wird ein Verfahren zur Entfernung von Schwermetallsulfiden aus wäßrigen Lösungen vorgestellt, bei dem man dem zu behandelnden System ionogene Polymere zusetzt. Dabei handelt es sich um den gleichzeitigen Einsatz von kationischen und anionischen Polymeren zur Fällung der Schwermetalle und um die nachfolgende Abtrennung durch Filtration. Dies ist unter den Bedingungen, die bei der geothermischen Energiegewinnung herrschen, kein einfach zu praktizierendes Verfahren.

Gemäß der DE 25 36 969 sollen sich mit Hilfe ionogener Polymere oder Kombinationen ionogener Polymere Schwermetallsulfide wie Quecksilbersulfid, Kupfersulfid und Molybdänsulfid in sauren, wäßrigen Suspensionen zu groben Flokken agglomerieren lassen, die so stabil sind, daß - vorzugsweise nach Zusatz von Filterhilfsmitteln - eine praktisch vollständige Entfernung der Sulfide durch Filtration möglich sein soll; die Wirksamkeit gegenüber bestimmten Schwermetallsulfiden ist jedoch bei höheren Temperaturen noch nicht als befriedigend zu bezeichnen.

In der EP 82 657 werden Polyampholyte vorgestellt, die gute Wirkung als Belagverhinderer bei Entsalzungsanlagen und bei Brunnen- bzw. Erdölbohrungen gezeigt haben. Dabei werden Inkrustationen aus Carbonaten, Sulfaten und Phosphaten der Erdalkalimetalle sowie aus Kieselsäure bekämpft, indem wäßrige Bohrflüssigkeiten mit einer wäßrigen Tondispersion und einem Gehalt eines Polyampholyts, der Carboxylfunktionen enthält, im Kreislauf in Bohrlöcher gepumpt und gefördert werden.

Bei der Erdölförderung können somit recht gut bestimmte Inkrustationen vermieden werden, über die Wirksamkeit des Verfahrens zur Verhinderung von Korrosion und Belägen in hochenthalpischen Fluiden führenden Systemen läßt sich jedoch nichts aussagen.

Außerdem hat im Gegensatz zu dieser intensiven Entwicklungsarbeit das Problem der Schwermetallinkrustationen bisher wenig Aufmerksamkeit erhalten, so daß es an geeigneten Mitteln zur Bekämpfung der eingangs genannten, oft schwerwiegenden Störungen, fehlt. So führen insbesondere Schwermetallsulfidablagerungen zu besonderen Beeinträchtigungen in Anlagen zur geothermischen Energiegewinnung.

In Anbetracht des bekannten Standes der Technik ist es somit Aufgabe der Erfindung, Beläge aus Schwermetallsulfiden in hochenthalpischen Fluiden führenden Systemen effektiv zu verhindern.

Gelöst werden diese und weitere nicht im einzelnen angeführte Aufgaben durch eine Verwendung gemäß Anspruch 1. Bevorzugte Ausführungsformen der Erfindung werden in den auf Anspruch 1 rückbezogenen Ansprüchen unter Schutz gestellt.

Dadurch, daß bei der Behandlung des hochenthalpischen Fluids ein Copolymer verwendet wird, das durch Umsetzung von

A) wenigstens einem vinylisch ungesättigten Monomeren, welches wenigstens eine Carboxylgruppe aufweist

mit

B) wenigstens einem vinylisch ungesättigten Monomeren, welches wenigstens eine tertiäre Aminogruppe aufweist,

erhältlich ist, gelingt eine effektive Verhinderung von Korrosion- und Belagbildung, insbesondere auch von Belägen schwermetallsulfidischen Ursprungs, wobei schon äußerst kleine Mengen von Copolymeren, die erfindungsgemäß gleichzeitig Carboxyl- und tertiäre Aminogruppen tragen, zur Erzielung eines günstigen Verhinderungseffektes ausreichen.

Die erfindungsgemäß zu verwendenden Copolymeren können dabei auf jede beliebige Weise mit dem zu behandelnden hochenthalpischen Fluid in Kontakt gebracht werden.

Am besten werden sie direkt in den Fluidenstrom (Gas, übersättigter Wasserdampf bzw. Wasser) geleitet bzw. eingesprüht. Genauso können die erfindungsgemäßen Copolymeren beispielsweise als Belagverhinderer in den Leitungen von Anlagen zur geothermischen Energiegewinnung oder in Anlagen verwendet werden, die über Wärmetauscher Energie aus hydrothermalen Quellen gewinnen.

Als Copolymere, die im Verfahren der Erfindung erfolgreich einsetzbar sind, kommen in bevorzugter Ausführungsform solche Copolymere zum Einsatz, zu deren Erhalt als vinylisch ungesättigte wenigstens eine Carboxylgruppe aufweisende Verbindung eine Verbindung der Formel (I)

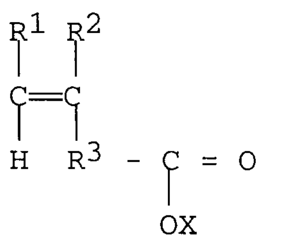

(I)

eingesetzt wurde, worin

$R^1$ und $R^2$ unabhängig voneinander gleich oder verschieden Wasserstoff, Phenyl, $C_{1-3}$-Alkyl oder COOX, vorzugsweise Wasserstoff, Methyl oder Ethyl, sind,

$R^3$ eine gerade oder verzweigte Kette mit 0 bis 12, vorzugsweise 0 bis 3 Kohlenstoffatomen ist, und

X Wasserstoff, ein

Alkali-Metall, ein Erdalkalimetall oder eine carboxylierte Alkylgruppe mit 2 bis 8 C-Atomen ist, vorzugsweise Wasserstoff, Natrium, Kalium oder Caesium.

Unter den carboxylgruppenhaltigen Monomeren der Formel (I) werden zum Aufbau des Copolymeren, das erfindungsgemäß eingesetzt werden kann, als Komponente A) in ganz bevorzugter Verfahrensvariante Acrylsäure, Methacrylsäure, Maleinsäure, Maleinsäureanhydrid, Itaconsäure, Citraconsäure und/oder β-Carboxyethylacrylat eingesetzt.

Von diesen Monomeren hat sich der Einsatz von Acrylsäure als Hauptbestandteil der Komponente A) zum Aufbau des erfindungsgemäß einzusetzenden Copolymers als sehr vorteilhaft erwiesen.

Die Verbindungen der Komponente A) können entweder allein oder in Mischung von zwei oder mehreren Monomeren aus der Gruppe A) am Aufbau des Copolymers beteiligt sein. Zu bevorzugten Kombinationen gehören u. a. Methacrylsäure und Acrylsäure oder Acrylsäure und Carboxylethylacrylat.

Für die wenigstens eine tertiäre Aminogruppe tragenden Monomeren B) kommen im Rahmen der Erfindung bevorzugt Verbindungen der Formel (II)

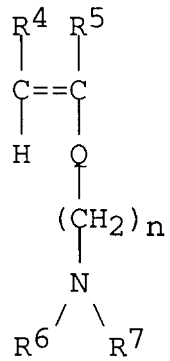

(II)

in Frage, worin
$R^4$ und $R^5$ unabhängig voneinander gleich oder verschieden Wasserstoff, Phenyl oder $C_{1-3}$-Alkyl, vorzugsweise Wasserstoff, Methyl oder Ethyl, sind,
Q Carbonyl, Carboxyl oder Phenyl ist,
n 0, 1, 2 oder 3 ist, und
$R^6$ und $R^7$ unabhängig voneinander, gleich oder verschieden, entweder
Phenyl oder $C_{1-3}$-Alkyl, vorzugsweise Methyl oder Ethyl, oder
$C_{1-3}$-Alkylen sind, wobei im letzteren Fall $R^6$ und $R^7$ zu einem Ring mit 4 bis 6 Kohlenstoffatomen geschlossen sind, welcher ein- oder mehrfach gerad- oder verzweigtkettig $C_{1-4}$-Alkyl substituiert sein kann und/oder Heteroatomsubstituenten tragen kann.

Besonders bevorzugt sind von diesen Verbindungen
N,N-Dimethylaminoethyl(meth)acrylat,
N,N-Diethylaminoethyl(meth)acrylat,
N,N-Dimethylaminopropyl(meth)acrylamid,
N,N-Diethylaminopropyl(meth)acrylamid und/oder
p-Dimethylaminostyrol.

Hierbei ist unter der Bezeichnung (meth) jeweils sowohl das von Acrylsäure abgeleitete als auch das von der Methacrylsäure abgeleitete Monomere zu verstehen.

Für den Einsatz als Komponente B) zum Aufbau des erfindungsgemäß anzuwendenden Copolymers kommen vorteilhaft auch Verbindungen der Formel (III)

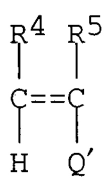

(III)

zur Anwendung, worin
$R^4$ und $R^5$ die bei Formel II angegebene Bedeutung besitzen und
Q' ein aromatischer oder aliphatischer Heterozyklus mit 5 bis 7 Atomen ist, der eine tertiäre Aminogruppe im Ring enthält.

Besonders bevorzugt sind von den Verbindungen, die zur allgemeinen Formel (III) gehören, 2-Vinylpyridin und/oder 4-Vinylpyridin.

Die Verbindungen der Formel (II) und/oder Formel (III) können allein oder in Mischung von zwei oder mehreren zum Aufbau des Copolymeren als Komponente B) verwendet werden.

In ganz besonders bevorzugter erfindungsgemäßer Ausführungsform wird zum Erhalt des im erfindungsgemäßen Verfahren einzusetzenden Copolymers als Komponente B) wenigstens ein Monomeres aus der Gruppe ausgewählt, die aus den Verbindungen N,N-Dimethylaminoethyl(meth)acrylat,
N,N-Diethylaminoethyl(meth)acrylat,
N,N-Dimethylaminopropyl(meth)acrylamid,

N,N-Diethylaminopropyl(meth)acrylamid,
p-Dimethylaminostyrol, 2-Vinylpyridin und 4-Vinylpyridin besteht. Ganz besonders vorteilhaft sind auch Kombinationen wenigstens zweier der vorgenannten Monomere.

Darüber hinaus können am Aufbau des Copolymeren gemäß der Erfindung zusätzlich Verbindungen C) beteiligt sein, bei denen es sich um weitere vinylisch ungesättigte Monomere handelt, die mit den Verbindungen A) und B) copolymerisierbar sind.

Zu den Verbindungen C) gehören u. a. (Meth)acrylamid, (Meth)acrolein, (Meth)acrylonitril, Vinylsulfonsäure, Allylsulfonsäure, 2-(Meth)acrylamido-2-methylpropansulfonsäure, Vinylphosphonsäure, Allylphosphonsäure, Allylalkohol, Vinylglykol, Vinylacetat, Allylacetat, Ester der (Meth)acrylsäure mit 1-8 C-Atome im Alkoholrest wie z. B. Methyl(meth)acrylat, Ethyl(meth)acrylat, Propyl(meth)acrylat, Butyl(meth)acrylat evtl. mit Alkohol bzw. mit Aminogruppen funktionalisiert, Ethylen, Propylen, Methylvinylether, Ethylvinylether, Styrol, alpha-Methylstyrol, mehrfach ungesättigte Monomere wie z. B. Ester aus Ethylenglykol, Propylenglykol, Butandiol bzw. Hexandiol mit (Meth)acryl-, Maleinsäure, Fumarsäure, Ester aus Polyethylenglykol oder Copolymeren aus Ethylen- und Propylenglykol mit (Meth)acrylsäure, Maleinsäure und/oder Fumarsäure, zwei- bis dreifach mit (Meth)acryl- bzw. Maleinsäure veresterte Anlagerungsprodukte von Ethylenoxid und/oder Propylenoxid an Trimethylolpropan, und/oder mindestens zweifache Ester aus (Meth)acryl-bzw. Maleinsäure und Glycerin bzw. Pentaerythrit, Triallylamin, Tetraallylethylendiamin, Polyethylenglykoldivinylether, Trimethylolpropandiallylether, Butandioldiallylether und/oder Pentaerythrittriallylether.

Zum Erhalt des erfindungsgemäß nützlichen Copolymeren wird

A) in einer Menge von 40 - 99 Gew.-%, bevorzugt 70 - 90 Gew.-%

mit

B) in einer Menge von 1 - 60 Gew.-%, bevorzugt 5 - 30 Gew.-%

umgesetzt.

C) als fakultative Komponente wird ggf. in einer untergeordneten Menge von 0 - 20 Gew.-%, bevorzugt 0 - 10 Gew.-%, mit A) und B) copolymerisiert, wobei die Gesamtmenge A), B) und C) jeweils 100 Gew.-% beträgt.

Die einzusetzende Menge an C) richtet sich dabei an der gewünschten Wirkung aus. Die fakultativen Bestandteile C) des erfindungsgemäß zu verwendenden Copolymeren sind der Menge nach so zu bemessen, daß sie keinen negativen Einfluß auf die erzielbare Wirkung ausüben. So können im Einzelfall auch größere Anteile eines oder mehrerer Comonomere im erfindungsgemäß einzusetzenden Copolymeren toleriert werden, sofern sie die effiziente Verhinderung von Korrosion und Belägen in hochenthalpischen Fluiden nicht nachteilig beeinflussen. Angestrebt ist daher, wenn überhaupt, eine möglichst niedrige Konzentration an Komponenten der Gruppe C). Letzlich entscheidet über Art und Menge der "Beimengung" C) die Tatsache, daß ein negativer Effekt vermieden, eine positive Wirkung jedoch nicht erreicht werden muß.

Das Molekulargewicht der einzusetzenden Copolymeren ist über weite Grenzen variabel.

Prinzipiell ist zu erwarten, daß die Fällungsinhibierung vom Molekulargewicht unabhängig sein sollte. In der Praxis wäre jedoch ein zu hohes Molekulargewicht der Polymere auf Grund seiner verdickenden Wirkung von Nachteil.

Daher kennzeichnet sich das Verfahren der Erfindung in weiterhin vorteilhafter Verfahrensabwandlung dadurch, daß man Copolymere mit einem mittleren Molekulargewicht $M_W$ zwischen 1.000 und 500.000, bevorzugt zwischen 2.000 und 100.000 einsetzt.

Hierbei beziehen sich die Molekulargewichtsangaben auf die Einheit g/mol. Die Bestimmung des Molekulargewichts erfolgte über Gelpermeationschromatographie (GPC) an LiChrospher Diol Säulen und Phosphatpuffer (pH = 7) als Eluentlösung. Die Eichung wurde unter Verwendung engverteilte Polyacrylsäure durchgeführt. Dabei bewirkt die nicht konstante chemische Zusammensetzung der erfindungsgemäßen Copolymeren einen Fehler in dem Absolutwert des Molekulargewichtes. Diese allgemein bekannte Fehlerquelle kann nicht ohne weiteres beseitigt werden, so daß alle gemachten Angaben über $M_W$ als relativ zu der Eichung mit Polyacrylsäure zu verstehen sind.

Auch Mischungen aus verschiedenen Copolymeren mit unterschiedlichem Molekulargewicht bzw. mit untersch. Zusammensetzung sind für das Verfahren gemäß der Erfindung mit Vorteil einsetzbar.

Die Herstellung der erfindungsgemäß einzusetzenden Copolymeren erfolgt nach bekannten Methoden.

Hilfreiche Hinweise dazu sind in "Acrylic and Methacrylic Acid Polymers", J. W. Nemec und W. Bauer jr, und in "Radical Polymerisation", C. H. Baumford, in jew. Vol. 1 und 13 der "Encyclopedia of Polymer Science and Technology" zu finden.

Die Herstellung der Copolymerisate kann durch alle üblichen radikalischen Polymerisationsverfahren geschehen. In einer beispielhaften Aufzählung werden folgende Herstellmethoden genannt: Lösungspolymerisation, wobei die Monomere in Wasser oder in anderem Lösungsmittel oder Lösungsmittelgemisch mit eventuellen Zusätzen von niedermolekularen organischen und/oder anorganischen Verbindungen gelöst werden. Fällungspolymerisation in solchen Lösungsmitteln, in denen die Monomere mindestens zum Teil löslich und die Polymere nicht löslich sind.

Emulsions- und Suspensionspolymerisation in solchen Lösungsmitteln, in denen die Monomere nicht löslich sind und die Emulsionen bzw. Suspensionen durch Zusatz von nieder- und/oder hochmolekularen Substanzen stabilisiert werden.

Auch eine durch Strahlen induzierte Polymerisation kann zur Herstellung der erfindungsgemäßen Polymerisate verwendet werden.

Im Rahmen der Erfindung ist die Lösungspolymerisation in Wasser besonders bevorzugt.

Hierbei ist es von Vorteil, wenn sich die Monomerkonzentration zwischen 5 und 70 % bewegt, wobei je nach Viskosität der entstehenden Polymerlösung 25 bis 50 % bevorzugt wird.

Als Initiatoren für die Lösungspolymerisation sind sowohl thermisch zersetzbare Radikalspender, die eine ausreichende Löslichkeit im gewählten Lösungsmittel bzw. in den Monomeren aufweisen, als auch Redoxinitiatoren, die mehrere Komponenten aufweisen können, geeignet. Bevorzugt sind jedoch wasserlösliche Substanzen wie Wasserstoffperoxid sowie Peroxodisulfate der Alkalimetalle.

Die Polymerisationstemperatur wird zusammen mit der Initiatormenge benutzt, um das Molekulargewicht des gewünschten Lösungspolymerisats zu steuern. Sie liegt zwischen 30 °C und 180 °C, wobei es von Vorteil ist, sie zwischen 60 °C und 130 °C zu halten. Niedrige Temperaturen bringen meistens zu hochmolekulare Polymerisate, zu hohe Temperaturen können Polymerabbau verursachen.

Das Molekulargewicht kann auch durch geeignete Regler wie Mercaptane (z. B. Thioglykolsäure und Mercaptopropionsäure und ihre Ester, 2-Mercaptoethanol, Butyl-, Octyl- bzw. Dodecylmercaptan) und niedermolekulare Alkohole gesteuert werden.

Die Art und Weise, mit der die erfindungsgemäß zu verwendenden Copolymeren mit den zu behandelnden hochenthalpischen Fluiden in Kontakt zu bringen ist, ist, wie bereits erwähnt, unkritisch.

Es gibt jedoch besonders vorteilhafte Kontaktierungsmethoden, die dazu geeignet sind, die Effektivität der Belagverhinderung weiter zu steigern.

Hierzu gehören im Rahmen der Erfindung u. a. diejenigen Verfahrensabwandlungen, bei denen man Copolymer und hochenthalpisches Fluid im Gegenstromverfahren kontaktiert, das Copolymer als Aerosol in den Fluidstrom sprüht oder das Copolymer in Form eines Netzes aus Fasern des Copolymers einsetzt.

Alle diese Verfahrensmodifikationen können eine ausgezeichnete Belagverhinderung gewährleisten.

Die Zugabemenge der Belagverhinderer dieser Erfindung zum hochenthalpischen Fluid unterliegt keinen besonderen Beschränkungen. Sie variiert je nach chemischer Zusammensetzung des hochenthalpischen Fluids und je nach Baudaten der Anlage, so daß eine Optimierungsarbeit von Fall zu Fall notwendig sein kann.

In bevorzugter Verfahrensvariante setzt man das Copolymer in einer Konzentration von 1 bis 400 ppm, bevorzugt 10 bis 100 ppm bezogen auf das Gewicht des zu behandelnden Fluids ein.

Zur vollständigen Fällungsinhibierung von z. B. 30 ppm $Sb^{3+}$ genügen beispielsweise schon 60 ppm des erfindungsgemäßen Polymers; wenn, wie beispielsweise im geothermischen Betrieb üblich, nur eine zeitliche Verzögerung der Fällung angestrebt wird, ist eine noch kleinere Menge schon ausreichend.

Die geothermischen Energiegewinnungsanlagen gehören auch zu den bevorzugten Anwendungsgebieten für das erfindungsgemäße Verfahren. Hierbei ist unter dem hochenthalpischen Fluid insbesondere Wasser zu verstehen. Gerade für die spezielle Problematik der Verhinderung von Schwermetallsulfiden hat sich das Verfahren der Erfindung als ganz besonders nützlich erwiesen. So kann man beispielsweise in den meisten Fällen nach Durchführung des erfindungsgemäßen Behandlungsverfahrens aus dem behandelten Fluid mit einer wäßrigen $Na_2S$-Lösung mit einer Konzentration von 10 mMol/l keine Antimonsulfide ausfällen.

Dieses Beispiel verdeutlicht hervorragend die überragenden Eigenschaften der Erfindung.

Die erfindungsgemäße Verwendung kann auch zur Bekämpfung beispielsweise carbonatischer Beläge dienen. Auch ist von einer guten Wirksamkeit der erfindungsgemäß einzusetzenden Verbindungen gegen Sulfatinkrustationen auszugehen. Es wird jedoch betont, daß mit dem erfindungsgemäßen Verfahren unter Einsatz der hierin definierten Copolymeren erstmalig eine wirksame Methode zur Verhinderung von Schwermetallsulfidbelägen zur Verfügung gestellt wird.

Im folgenden soll die Erfindung noch weitgehender anhand von Ausführungsbeispielen verdeutlicht werden.

<u>Herstellung von Copolymeren</u>

Beispiel 1

In einem mit 4 Zuleitungsmöglichkeiten, Kühler, Rührer und Temperierung ausgestatteten Reaktor werden 210 Gewichtsteile VE-Wasser (vollentsalztes Wasser) vorgelegt. Der Reaktor wird ungefähr. 10 min lang bei ungefähr 400 mbar evakuiert und dann mit $N_2$ gespült. Währenddessen wird der Reaktorinhalt aufgeheizt. Bei T = 95 °C beginnt unter starker Rührung die getrennte Zuleitung von

150 Gewichtsteilen Acrylsäure
150 Gewichtsteilen Dimethylaminoethylmethacrylat
37 Gewichtsteilen Peroxodisulfat gelöst in 340 Teilen VE-Wasser.

Die Reaktionsmischung wird zwei Stunden lang bei einer Temperatur zwischen 93 und 97 °C durchgeführt. Anschließend werden die Leitungen mit jeweils 15 Teilen VE-Wasser gespült und die Temperatur eine Stunde lang auf 100 °C gehalten.

Nach der Abkühlung auf ungefähr 40 °C kann die Polymerlösung abgelassen werden. Zur Vermeidung der Polymerausfällungen, die gelegentlich bei Verdünnung dieser Lösung auftreten, wird der pH durch ungefähr 100 Teile 50 %-ige NaOH-Lösung auf 7 - 9 eingestellt.

Das damit hergestellte Polymer besitzt ein Molekulargewicht (Mw) (bezogen auf Polyacrylsäure) von 8000 g/mol.

Beispiel 2

In einem ähnlichen Reaktor wie im Beispiel 1 werden 330 Teile VE-Wasser und 3 Teile 50 %iges $H_2O_2$ vorgelegt. Während der Evakuierung und der $N_2$-Spülung wird die Innentemperatur auf 90 °C gebracht. Dann werden unter starkem Rühren
390 Gewichtsteile Acrylsäure
210 Gewichtsteile Dimethylaminoethylmethacrylat
48 Gewichtsteile Natriumperoxodisulfat gelöst in 570 Teilen VE-Wasser
zwei Stunden lang bei einer Temperatur zwischen 88 und 92 °C zudosiert.

Es folgt eine Nachreaktion von einer Stunde bei ungefähr 100 °C.

Beim Abkühlen fällt eine weiche Masse aus, die sich durch Einstellung auf pH 8 - 9 durch 10 %ige NaOH-Lösung wieder löst.

Das Polymer besitzt ein Molekulargewicht (Mw) (bezogen auf Polyacrylsäure) von 52.000 g/mol.

Beispiel 3

Mit ähnlichem Verfahren wie in Beispiel 2 werden
480 Gewichtsteile Acrylsäure
120 Gewichtsteile Dimethylaminoethylmethacrylat
48 Gewichtsteile Natriumperoxodisulfat gelöst in 570 Teilen VE-Wasser
polymerisiert. Das entstandene Polymer besitzt ein Molekulargewicht (Mw) (bezogen auf Polyacrylsäure) von 36.000 g/mol.

Beispiel 4

Mit ähnlichem Verfahren wie in Beispiel 2 werden
570 Gewichtsteile Acrylsäure
30 Gewichtsteile Dimethylaminoethylmethacrylat
48 Gewichtsteile Natriumperoxodisulfat gelöst in 570 Teilen VE-Wasser
copolymerisiert. Das entstandene, gut wasserlösliche Polymer besitzt ein Molekulargewicht (Mw) (bezogen auf Polyacrylsäure) von 39.000 g/mol.

Beispiel 5

Mit ähnlichem Verfahren wie im Beispiel 2 werden 700 Gewichtsteile VE-Wasser vorgelegt. Nach Evakuierung und $N_2$-Spülung und nachdem die Temperatur 100 °C erreicht hat, werden voneinander getrennt
113 Gewichtsteile Acrylsäure
113 Gewichtsteile 2-Hydroxy-3-methacryloxypropyltrimethylammoniumchlorid gelöst in 113 Teilen VE-Wasser
19,5 Gewichtsteile Natriumperoxodisulfat gelöst in 440 Teilen VE-Wasser
2 Stunden lang zugeleitet. Es folgt eine Nachreaktion von 1,5 Stunden, immer noch bei 100 °C. Das Polymer besitzt ein Molekulargewicht (bezogen auf Polyacrylsäure) von 9.500 g/mol.

<u>Test für Belagverhinderungseigenschaften</u>

Die Überprüfung der Wirksamkeit von Fällungsverhinderern für geothermische Zwecke stellt unter Laborbedingung grundsätzliche Fragen bezüglich der Repräsentativität solcher Tests. Nur mit großem Aufwand können die in der Natur herrschenden Bedingungen von Temperatur und Druck nachgestellt werden. Auch Verfahrensschritte wie die Entspannung der komprimierten Fluide, der Wärmeaustausch oder die Durchleitung salzhaltiger Lösungen durch unterschiedlich ausgelegte Leitungen können nur näherungsweise in Labor nachgestellt werden.

Daher wurde zur relativen Einstufung der verschiedenen Produkte ein Titrierapparat verwendet, der mit einer Photozelle für Trübungsmessungen versehen war. Die Titration findet in einer mit einem Lichtleiter ausgestatteten Meßzelle statt; dabei kann die entstehende Trübung kontinuierlich erfaßt und über einen Schreiber aufgezeichnet werden.

**I. Antimonsulfid**

In der Meßzelle werden 50 ml einer 0.44 mMol/l Lösung $SbCl_3$ (54 ppm $Sb^{3+}$) in verdünnter Salzsäure gelöst, so daß der pH den Wert 0.5 nicht übersteigt. Dazu werden verschiedene Mengen des potentiellen Fällungsverhinderers gelöst.

Titriert wird es mit einer 10 mMol/l wäßrigen Lösung $Na_2S$. Die entstehende Trübung wird verfolgt; das Titrationsvolumen wird erfaßt, bei dem die Transmission um 10 % abgenommen hat. Das Volumen (in ml) der $Na_2S$-Lösung bis zu diesem Punkt, wird in die folgende Gleichung eingesetzt:

$$\mathrm{FI\ (g\ Sb_2S_3/g\ BV)} = \frac{\mathrm{(X(ml) - BW(ml)) * 3.397(mg/ml}}{\mathrm{BV(mg)}}$$

FI = Fällungsinhibierung
X = Volumenverbrauch $Na_2S$-Lösung zur 10 %igen Transmissionsabnahme (in ml);
BW = Blindwert; Verbrauch bei der Titration ohne Belagverhinderer (in ml);
BV = Menge Belagverhinderer (in mg).

Die Konstante 3.397 stellt das Gewicht (mg) $Sb_2S_3$ dar, das durch Zugabe von 1 ml $Na_2S$-Lösung der Stöchiometrie nach fällbar wäre.

In der nachfolgenden Tabelle wird eine Übersicht über die Titrationsergebnisse mit $Sb^{3+}$ gegeben, wobei zu Vergleichszwecken L-Weinsäure und Polyacrylsäure-Natriumsalz mit untersucht wurden.

Ergebnisse der Titrationen mit $Sb^{3+}$

| Produkt | BV-Eingesetzte Konzentration (ppm) | X (ml) | FI $\frac{g\ Sb_2S_3}{g\ BV}$ |
|---|---|---|---|
| Blindwert (BW) | | 2.25 | |
| L-Weinsäure | 50<br>100<br>500 | 2.85<br>3.18<br>3.33 | 0.82<br>0.63<br>0.15 |
| Polyacrylsäure Natriumsalz Mw = 5000 g/mol | 50<br>100<br>500 | 2.65<br>3.30<br>4.9 | 0.54<br>0.71<br>0.36 |
| Polymer aus Beispiel 1 | 50<br>100<br>500 | 3.65<br>5.25<br>31.6 | 1.90<br>2.04<br>4.00 |
| Polymer aus Beispiel 2 | 50<br>100 | 4.50<br>6.30 | 3.05<br>2.75 |
| Polymer aus Beispiel 3 | 12.5<br>25<br>100<br>500 | 7.60<br>17.8<br>58<br>>80 | 29<br>42<br>38<br>* |
| Polymer aus Beispiel 4 | 12.5<br>25 | 25<br>>50 | >100<br>* |
| Polymer aus Beispiel 5 | 50<br>100<br>500 | 2.30<br>2.70<br>7.1 | 0.07<br>0.61<br>0.65 |

In den mit einem * gekennzeichneten Fällen bewirkte das getestete Mittel eine so starke Verzögerung der Sulfidfällung, daß keine zuverlässige Auswertung mehr möglich war.

Eins dieser Produkte, nämlich das Polymer aus Beispiel 1, wurde unter Feldbedingungen in einer durch Antimon, Arsen und Kieselsäure belasteten geothermischen Quelle mit folgenden Kenndaten getestet.

| | |
|---|---|
| Temperatur | 180 °C |
| pH | 6.5 |
| Na+ | 1500 ppm |
| K+ | 320 ppm |
| NH4+ | 130 ppm |
| Mg++ | < 0.2 ppm |
| Ca++ | 5.1 ppm |
| As tot. | 90 ppm |
| Sb tot | 41 ppm |
| Cl- | 2500 ppm |
| $SO_4$-- | 10.9 ppm |
| $H_2S$ | 55 ppm |
| $SiO_2$ | 1090 ppm |

Aus dieser Quelle wurden 4.5 to/h Dampf und 6.5 to/h Wasser bei einem durchschnittlichen Druck von 12 bar und einer Temperatur von 180 °C gewonnen. Nach einer Betriebsdauer von drei Wochen ohne Belagverhinderer waren Inkrustationen von 2.5 cm hauptsächlich aus Antimonsulfid festgestellt worden, die die Zuleitungen und noch mehr die Rückführleitungen an die Bohrquelle gefährlich einengten.

Das Polymerisat aus Beispiel 1 wurde in abnehmender Konzentration von 140 auf 67 ppm getestet. Nach den sechswöchigen Tests konnten keine Spuren von Schwermetallablagerungen festgestellt werden.

**II. Wismutsulfid**

In der Meßzelle werden 100 ml einer 0.22 mMol/l Lösung $BiCl_3$ (46 ppm $Bi^{3+}$) in verdünnter Salzsäure gelöst, so daß der pH unterhalb von 0.5 bleibt. Dazu werden verschiedene Mengen des potentiellen Fällungsverhinderers gelöst.

Titriert wird es mit einer 10 mMol/l wäßrigen Lösung $Na_2S$. Die enstehende Trübung wird verfolgt; das Titrationsvolumen wird erfaßt, bei dem die Transmission um 10 % abgenommen hat. Das Volumen (in ml) der $Na_2S$-Lösung bis zu diesem Punkt, wird in die folgende Gleichung eingesetzt:

$$FI\ (g\ Bi_2S_3/g\ BV) = \frac{(X(ml) - BW(ml)) * 5.142(mg/ml)}{BV(mg)}$$

FI = Fällungsinhibierung;
X = Volumenverbrauch $Na_2S$-Lösung zur 10 %igen Transmissionsabnahme (in ml);
BW = Blindwert; Verbrauch bei der Titration ohne Belagverhinderer (in ml);
BV = Menge Belagverhinderer (in mg).

Die Konstante 5.142 stellt das Gewicht $Bi_2S_3$ dar, das der Stöchiometrie nach durch Zugabe von 1 ml $Na_2S$-Lösung fällbar wäre (mg/ml).

Ergebnisse der Titrationen mit $Bi^{3+}$

| Produkt | BV-Eingesetzte Konzentration (ppm) | X (ml) | FI $\frac{g\ Bi_2S_3}{g\ BV}$ |
|---|---|---|---|
| Blindwert (BW) | | 1.25 | |
| Polyacrylsäure Natriumsalz Mw = 5000 g/mol | 25<br>50<br>250 | 0.5<br>0.55<br>0.55 | < 0<br>< 0<br>< 0 |
| Polymer aus Beispiel 1 | 25<br>50<br>500 | 3.10<br>4.40<br>5.40 | 3.8<br>3.2<br>0.9 |
| Polymer aus Beispiel 4 | 25<br>50<br>250 | 1.90<br>2.15<br>2.5 | 1.35<br>0.9<br>0.25 |

**III. Bleisulfid**

In die Meßzelle werden 100 ml einer 0.50 mMol/l wäßrige Lösung Bleiacetat (103 ppm $Pb^{2+}$) vorgelegt. Dazu werden verschiedene Mengen des potentiellen Fällungsverhinderers gelöst.

Titriert wird es mit einer 10 mMol/l wäßrigen Lösung $Na_2S$. Die enstehende Trübung wird verfolgt; das Titrationsvolumen wird erfaßt, bei dem die Transmission um 10 % abgenommen hat. Das Volumen (in ml) der $Na_2S$-Lösung bis zu diesem Punkt, wird in die folgende Gleichung eingesetzt:

$$\text{FI (g PbS/g BV)} = \frac{(\text{X(ml)} - \text{BW(ml)}) * 2.393\text{(mg/ml)}}{\text{BV(mg)}}$$

FI = Fällungsinhibierung;
X = Volumenverbrauch $Na_2S$-Lösung zur 10 %igen Transmissionsabnahme (in ml);
BW = Blindwert; Verbrauch bei der Titration ohne Belagverhinderer (in ml);
BV = Menge Belagverhinderer (in mg).

Die Konstante 2.393 stellt das Gewicht PbS dar, das der Stöchiometrie nach durch Zugabe von 1 ml $Na_2S$-Lösung fällbar wäre (mg/ml).

Ergebnisse der Titrationen mit $Pb^{2+}$

| Produkt | BV-Eingesetzte Konzentration (ppm) | X (ml) | FI $\frac{g\ Bi_2S_3}{g\ BV}$ |
|---|---|---|---|
| Blindwert (BW) | | 0.75 | |
| Polyacrylsäure Natriumsalz Mw = 5000 g/mol | 25<br>50<br>250 | 0.38<br>0.38<br>1.5 | < 0<br>< 0<br>0.07 |
| Polymer aus Beispiel 1 | 25<br>50<br>250 | 1.24<br>1.43<br>3.25 | 0.47<br>0.32<br>0.24 |
| Polymer aus Beispiel 2 | 25<br>50<br>250 | 0.50<br>0.50<br>1.45 | < 0<br>< 0<br>0.07 |
| Polymer aus Beispiel 3 | 25<br>50<br>250 | 0.47<br>0.88<br>1.75 | < 0<br>ca. 0<br>0.1 |
| Polymer aus Beispiel 4 | 25<br>50<br>250 | 0.80<br>0.80<br>2.50 | ca. 0<br>ca. 0<br>0.17 |

Weitere Vorteile und Ausführungsformen ergeben sich aus den nachfolgenden Patentansprüchen.

## Patentansprüche

1. Verwendung eines Copolymers, das durch Umsetzung von

   A) wenigstens einem vinylisch ungesättigten Monomeren, welches wenigstens eine Carboxylgruppe aufweist

   mit

   B) wenigstens einem vinylisch ungesättigten Monomeren, welches wenigstens eine tertiäre Aminogruppe aufweist,

erhältlich ist, zur Verhinderung von Schwermetallsulfidbelägen in hochenthalpische Fluide führenden Systemen.

2. Verwendung nach Anspruch 1,
**dadurch gekennzeichnet,**
daß man als vinylisch ungesättigtes, wenigstens eine Carboxylgruppe aufweisendes Monomer eine Verbindung der Formel I

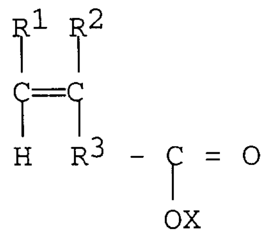

I

einsetzt, worin
$R^1$ und $R^2$ unabhängig voneinander gleich oder verschieden Wasserstoff, Phenyl, $C_{1-3}$-Alkyl oder COOX, vorzugsweise Wasserstoff, Methyl oder Ethyl, sind,
$R^3$ eine gerade oder verzweigte Kette mit 0 bis 12, vorzugsweise 0 bis 3 Kohlenstoffatomen ist, und
X Wasserstoff, ein
Alkali-Metall, ein Erdalkalimetall oder eine carboxylierte Alkylgruppe mit 2 bis 8 C-Atomen ist, vorzugsweise Wasserstoff, Natrium, Kalium oder Caesium.

3. Verwendung nach Anspruch 1 oder 2,
**dadurch gekennzeichnet,**
daß man als vinylisch ungesättigtes wenigstens eine Carboxylgruppe aufweisendes Monomer Acrylsäure, Methacrylsäure, Maleinsäure, Maleinsäureanhydrid, Itaconsäure, Citraconsäure und/oder β-Carboxyethylacrylat einsetzt.

4. Verwendung nach einem der Ansprüche 1 bis 3,
**dadurch gekennzeichnet,**
daß man als wenigstens ein vinylisches ungesättigtes Monomer, welches wenigstens eine tertiäre Aminogruppe aufweist, Verbindungen der Formel II

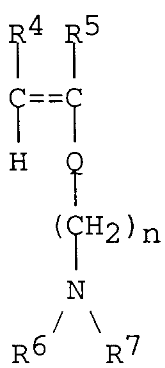

II

einsetzt, worin
$R^4$ und $R^5$ unabhängig voneinander gleich oder verschieden Wasserstoff, Phenyl oder $C_{1-3}$-Alkyl, vorzugsweise Wasserstoff, Methyl oder Ethyl, sind,
Q Carbonyl, Carboxyl oder Phenyl ist,
n 0, 1, 2 oder 3 ist, und
$R^6$ und $R^7$ unabhängig voneinander, gleich oder verschieden, entweder
Phenyl oder $C_{1-3}$-Alkyl, vorzugsweise Methyl oder Ethyl, oder
$C_{1-3}$-Alkylen sind, wobei im letzteren Fall $R^6$ und $R^7$ zu einem Ring mit 4 bis 6 Kohlenstoffatomen geschlossen sind,

welcher ein- oder mehrfach gerad- oder verzweigtkettig $C_{1-4}$-Alkyl substituiert sein kann und/oder Heteroatomsubstituenten tragen kann.

5. Verwendung nach einem der Ansprüche 1 bis 3,
**dadurch gekennzeichnet,**
daß man als wenigstens ein vinylisches ungesättigtes Monomer, welches wenigstens eine tertiäre Aminogruppe aufweist, Verbindungen der Formel III

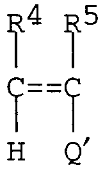

III

einsetzt, worin
$R^4$ und $R^5$ die bei Formel II angegebene Bedeutung besitzen
und
Q' ein aromatischer oder aliphatischer Heterozyklus mit 5 bis 7 Atomen ist, der eine tertiäre Aminogruppe im Ring enthält.

6. Verwendung nach einem der Ansprüche 1 bis 4,
**dadurch gekennzeichnet,**
daß man als wenigstens ein vinylisches ungesättigtes Monomer, welches wenigstens eine tertiäre Aminogruppe aufweist,
N,N-Dimethylaminoethyl(meth)acrylat,
N,N-Diethylaminoethyl(meth)acrylat,
N,N-Dimethylaminopropyl(meth)acrylamid,
N,N-Diethylaminopropyl(meth)acrylamid, und/oder
p-Dimethylaminostyrol
einsetzt.

7. Verwendung nach einem der Ansprüche 1 bis 3 oder 5,
**dadurch gekennzeichnet,**
daß man als wenigstens ein vinylisches ungesättigtes Monomer, welches wenigstens eine tertiäre Aminogruppe aufweist,
2-Vinylpyridin und/oder 4-Vinylpyridin
einsetzt.

8. Verwendung nach Anspruch 6 und 7,
**dadurch gekennzeichnet,**
daß man als wenigstens ein vinylisches ungesättigtes Monomer, welches wenigstens eine tertiäre Aminogruppe aufweist,
eine Mischung von wenigstens zwei der in Anspruch 6 und/oder 7 aufgezählten Verbindungen
einsetzt.

9. Verwendung nach einem der vorhergehenden Ansprüche,
**dadurch gekennzeichnet,**
daß man Copolymere einsetzt, die erhältlich sind, indem man mit den Verbindungen A) und B) als Verbindungen C) wenigstens ein weiteres vinylisch ungesättigte Monomer umsetzt, welches mit den Verbindungen A) und B) copolymerisierbar ist.

10. Verwendung nach Anspruch 9,
**dadurch gekennzeichnet,**
daß man zum Erhalt des Copolymeren

A) in einer Menge von 40 - 99 Gew.-%, bevorzugt 70-90 Gew.-%

mit

B) in einer Menge von 1 - 60 Gew.-%, bevorzugt 5 - 30 Gew. %

und

C) in einer Menge von 0 - 20 Gew.-%, bevorzugt 0 - 10 Gew.-%

umsetzt.

**11.** Verwendung nach einem der vorhergehenden Ansprüche,
**dadurch gekennzeichnet,**
daß man Copolymere mit einem mittleren Molekulargewicht $M_W$ zwischen 1.000 und 500.000, bevorzugt zwischen 2.000 und 100.000 einsetzt.

**12.** Verwendung nach einem der vorhergehenden Ansprüche,
**dadurch gekennzeichnet,**
daß man Copolymer und hochenthalpisches Fluid im Gegenstromverfahren kontaktiert.

**13.** Verwendung nach Anspruch 12,
**dadurch gekennzeichnet,**
daß man das Copolymer als Aerosol in den Fluidstrom sprüht.

**14.** Verwendung nach Anspruch 12,
**dadurch gekennzeichnet,**
daß man das Copolymer in Form eines Netzes aus Fasern des Copolymers einsetzt.

**15.** Verwendung nach einem der vorhergehenden Ansprüche,
**dadurch gekennzeichnet,**
daß man das Copolymer in einer Konzentration von 1 bis 400 ppm, bevorzugt 10 bis 100 ppm bezogen auf das Gewicht des zu behandelnden Fluids einsetzt.

**16.** Verwendung nach einem der vorhergehenden Ansprüche in geothermischen Energiegewinnungsanlagen.

**17.** Verwendung nach einem der vorhergehenden Ansprüche,
**dadurch gekennzeichnet,**
daß man aus dem behandelten Fluid mit einer wäßrigen $Na_2S$-Lösung mit einer Konzentration von 10 mMol/l keine Antimonsulfide ausfällen kann.

Europäisches Patentamt

# EUROPÄISCHER RECHERCHENBERICHT

Nummer der Anmeldung
EP 95 11 3233

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US-A-4 372 913 (MAX KLEIN)<br>* Ansprüche 1-6 *<br>----- | | C02F5/12<br>C23F11/173 |
| | | | **RECHERCHIERTE SACHGEBIETE (Int.Cl.6)** |
| | | | C02F<br>C23F |

Der vorliegende Recherchenbericht wurde für alle Patentansprüche erstellt

| Recherchenort | Abschlußdatum der Recherche | Prüfer |
|---|---|---|
| DEN HAAG | 19.Dezember 1995 | Fouquier, J-P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)